# EUROPEAN PATENT APPLICATION

(11) **EP 3 098 170 A1**
(43) Date of publication of application: **30.11.2016**
(21) Application number: 16154082.8
(22) Date of filing: 03.02.2016
(51) Int. Cl.: B65B 7/28, B65B 55/00, B65B 31/04, B65B 31/06, B65B 57/00, B65D 81/20, B65D 51/24, B65D 51/18

(54) **VACUUMIZING APPARATUS FOR A STORAGE JAR AND METHOD FOR PRESERVING FOOD FOR A LONG TIME BY UTILIZING A STORAGE JAR**

(30) Priority: 27.05.2015 CN 201510277665
(71) Applicant: Yan, Shizhao, Zunyi City, Guizhou 564500 (CN)
(72) Inventor: Yan, Shizhao, Zunyi City, Guizhou 564500 (CN)
(74) Representative: Botti, Mario

(57) **Abstract**

The present invention relates to a vacuuming apparatus for a storage jar and a method for preserving food for a long time by utilizing a storage jar. The vacuuming apparatus for the storage jar comprises: a casing (11), a sealing ring (12), an air pumping assembly (13), an electrical switch button (14), an exhaust valve button (15), a pressure valve (16), a pressure valve spring and a pressure valve gang switch (17). The sealing ring (12) is fixed at the bottom of the casing (11). An air intake pipe of the air pumping assembly (13) communicates with the storage jar. The air pumping assembly (13) is electrically connected to the electrical switch button (14) and both the electrical switch button (14) and the exhaust valve button (15) extend out of the top of the casing (11). The casing (11) is equipped therein with a first airtight pipe in communication with the storage jar. The pressure valve (16) is installed in the first airtight pipe. The pressure valve spring is fixed between the first airtight pipe and the pressure valve (16). The pressure valve gang switch (17) is aligned with the pressure valve (16) and is connected with the electrical switch button (14) in series. Through an automatic control by the pressure valve (16) and the pressure valve gang switch (17) according to the present invention, the storage jar can maintain a certain vacuum status for a long time and thus it can effectively keep food fresh longer.

## Description

### Technical Field

The present invention relates to the field of daily articles, and more particular relates to a vacuumizing apparatus for a storage jar and a method for preserving food for a long time by utilizing the storage jar.

### Background Art

Storage jars, by definition, are containers for storing items, mainly used for storing food or items that should be kept free from moisture. Common storage jars define food preservation like this: as long as the sealing of a container is good, preservation effect can be achieved. Actually, although common storage jars have a sealing function, oxygen still exists therein, and oxygen is precisely one of the main factors that can keep the items truly fresh.

In order to improve the preservation effect of storage jars, vacuuming can be carried out to prevent contact between oxygen and food and then to extend the shelf life of food. However, in the prior arts, after vacuuming of a storage jar is performed using a vacuum pump, as time goes on and particularly when the sealing is not good, air will enter the storage jar and destroy the preservation effect of the storage jar.

### Summary of the Invention

The object of the present invention is to provide a vacuuming apparatus for a storage jar to enable the storage jar to maintain a vacuum status for a long time, and a method for preserving food for a long time by utilizing the storage jar.

In order to achieve the above object, a vacuuming apparatus for a storage jar is provided which comprises: a casing, a sealing ring, an air pumping assembly, an electrical switch button, an exhaust valve button, a pressure valve, a pressure valve spring and a pressure valve gang switch. The bottom of the casing is an inserting portion to be inserted to an opening of the storage jar. The sealing ring is mounted on the inserting portion. The air pumping assembly is mounted inside the casing. An air intake pipe of the air pumping assembly communicates with the storage jar. The air pumping assembly is electrically connected to the electrical switch button. Both the electrical switch button and the exhaust valve button extend out of a top of the casing to facilitate operations. The casing is equipped therein with a first airtight pipe in communication with the storage jar. The pressure valve is installed in the first airtight pipe. The pressure valve spring is inside the first airtight pipe such that one of its ends abuts against the pressure valve and another end thereof abuts against the bottom of the first airtight pipe. The pressure valve gang switch is aligned with the pressure valve and connected with the electrical switch button in series.

The vacuuming apparatus for a storage jar further comprises a sealing ring switch button and a sealing ring frame. The sealing ring switch button is provided at a center of the sealing ring frame. The sealing ring frame is supported by inner side of the sealing ring.

The vacuuming apparatus for a storage jar further comprises a pulling buckle and a pulling buckle fixing position provided on the top of the casing. The pulling buckle is installed at the pulling buckle fixing position by two rotary shafts. The pulling buckle is provided with a triggering piece and a triggering lever. When the pulling buckle is positioned closely in the pulling buckle fixing position, the triggering piece presses the sealing ring switch button, and the triggering lever abuts against the electrical switch button.

The air pumping assembly comprises a motor, a helical gear, a circular gear and an air pump. An output end of the motor is fixedly connected to the helical gear which is engaged with the circular gear. The air pump comprises a sleeve and a piston installed in the sleeve, and an end of the piston is fixed at an edge of the circular gear.

The casing is provided therein with a second airtight pipe in communication with the storage jar. The exhaust valve button is mounted in the second airtight pipe.

An exhaust valve button spring is mounted inside the second airtight pipe with one end of the exhaust valve button spring abutting against the bottom of the second airtight pipe and the other end of the exhaust valve button spring abutting against the exhaust valve button. The second airtight pipe is provided with a first vent and the exhaust valve button is provided with a second vent. When the exhaust valve button is pressed, the second vent is aligned with the first vent.

The casing comprises an upper casing and a lower casing. The upper and lower casings are fixedly connected by a fastening bolt. The lower casing is provided with a sealing ring fixing position in which the sealing ring is installed.

In addition, the present invention also provides a method for preserving food for a long time by utilizing a storage jar, the method comprising the steps of:
Step 1: installing a sealing bottom cap having a one-way vent valve at the opening of a storage jar;
Step 2: fixing an intermediate sealing safety sheath at the top of the sealing bottom cap with the bottom of the intermediate sealing safety sheath closely connected to the sealing bottom cap;
Step 3: installing the above-mentioned vacuuming apparatus for a storage jar at the top of the intermediate sealing safety sheath, and inserting the inserting portion of the casing of the vacuuming apparatus for a storage jar into the intermediate sealing safety sheath;
Step 4: pressing the electrical switch button of the vacuuming apparatus for a storage jar to start the exhaust assembly for exhausting air in the storage jar;
Step 5: as the air pressure in the storage jar gradually decreases, the pressure valve lowers in the first airtight pipe until the pressure valve gang switch disconnect with the pressure valve, which causes the vacuuming apparatus for a storage jar stop operating;
Step 6: removing the intermediate sealing safety sheath and the vacuuming apparatus for a storage jar, whereby the storage jar is maintained in a vacuum status; the intermediate sealing safety sheath and the vacuuming apparatus for a storage jar can be used to perform vacuuming for other storage jars.

Following to the above step 6, one can, at a certain interval, repeat steps 2-6 to the storage jar which has been vacuumized.

When a storage jar needs to be opened, on can repeat the above steps 2-3 to the storage jar which has been vacuumized and then press the exhaust valve button on the vacuuming apparatus for a storage jar.

At the above step 1, a double-layered sealing ring is provided at the sealing bottom cap of the one-way vent valve in order to fill the clearance between the opening of the storage jar and the sealing bottom cap.

The beneficial effects of the present invention are as below. The air pumping assembly of the vacuuming apparatus for a storage jar provided by this invention evacuates the air in the storage jar so that the storage jar can maintain a vacuum status for keeping food fresh. The vacuuming apparatus for a storage jar includes a pressure valve and a pressure valve gang switch so that switch of the air pumping assembly can be automatically controlled based on an air pressure in the storage jar. When the air pressure in the storage jar gradually decreases, the pressure valve lowers in the first airtight pipe until the pressure valve gang switch is disconnected with the pressure valve, which consequently cause the vacuuming apparatus for a storage jar stop operating. When air permeates into the storage jar, the air pressure in the storage jar gradually increases and the pressure valve moves up in the first airtight pipe until the pressure valve gang switch is triggered, which cause the air pumping assembly restart to operate. Through such an automatic control by cooperation of the pressure valve and the pressure valve gang switch, the storage jar can maintain a vacuum status for a long time and this configuration can effectively keep foods in the jar fresh for a long time.

### Brief Description of the Drawings

Figure 1 is a schematic diagram of a vacuuming apparatus for a storage jar according to the present invention;
Figure 2 is an internal schematic diagram of a vacuuming apparatus for a storage jar according to the present invention; and
Figure 3 is a flow chart illustrating a method for preserving food for a long time by utilizing a storage jar according to the present invention.

Labels of main components of the vacuuming apparatus according to the present application, as shown in the drawings, are as follows:

| | | | |
|---|---|---|---|
| 11. | casing; | 12. | sealing ring; |
| 13. | air pumping assembly; | 14. | electrical switch button; |
| 15. | exhaust valve button; | 16. | pressure valve; |
| 17. | pressure valve gang switch; | 18. | pulling buckle; |
| 19. | sealing ring switch button; | 20. | sealing ring frame; |
| 111. | upper casing; | 112. | lower casing; |
| 131. | motor; | 132. | helical gear; |
| 133. | circular gear; | 134. | air pump; |
| 181. | triggering piece; | 182. | triggering lever. |

### Detailed Description of the Embodiments

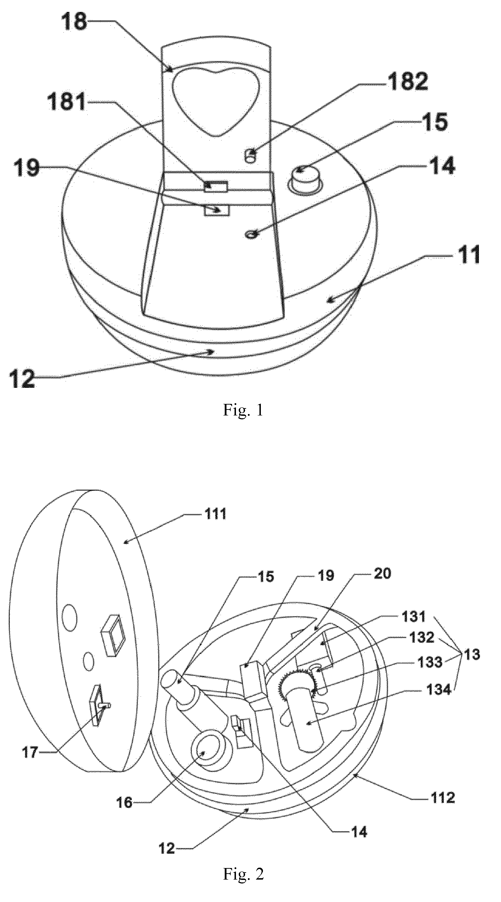

Referring to Fig. 1 and 2, a vacuuming apparatus for a storage jar according to the present invention comprises: a casing 11, a sealing ring 12, an air pumping assembly 13, an electrical switch button 14, an exhaust valve button 15, a pressure valve 16, a pressure valve spring and a pressure valve gang switch 17. The bottom of the casing 11 is an inserting portion to be inserted to an opening of the storage jar. The sealing ring 12 is mounted on the inserting portion. The air pumping assembly 13 is mounted inside the casing 11. An air intake pipe of the air pumping assembly 13 communicates with the storage jar. The air pumping assembly 13 is electrically connected to the electrical switch button 14. Both the electrical switch button 14 and the exhaust valve button 15 extend out of the top of the casing 11 to facilitate operations. The casing 11 is equipped therein with a first airtight pipe in communication with the storage jar. The pressure valve 16 is installed in the first airtight pipe. The pressure valve spring is inside the first airtight pipe such that one of its ends abuts against the pressure valve 16 and another end thereof abuts against the bottom of the first airtight pipe. The pressure valve gang switch 17 is aligned with the pressure valve 16 and also connected with the electrical switch button 14 in series.

The operating principle of the vacuuming apparatus for a storage jar according to the present invention is as follows.

First, the inserting portion of the casing 11 is inserted into the opening of the storage jar to hermetically connect the vacuuming apparatus and the storage jar. Then, the electrical switch button 14 is pressed to start the air pumping assembly 13, by which air is pumped out of the storage jar through the air intake pipe. As the air pressure in the storage jar gradually decreases, the pressure valve 16 keeps moving lower in the first airtight pipe until the pressure valve gang switch 17 disconnects with the pressure valve 16. The vacuuming apparatus will stop operating when the pressure valve gang switch 17 is disconnecting with the pressure valve 16. After some time, if air permeates into the storage jar, the air pressure in the storage jar will gradually increase. When the air pressure in the storage jar reaches a certain level, the pressure valve 16 will move up in the first airtight pipe which will finally cause the pressure valve gang switch 17 being triggered. In this circumstance, the air pumping assembly 13 will restart operating until the pressure valve gang switch 17 is disconnected again which causes the vacuuming apparatus stops operating again. With the above processes repeating, the storage jar can be maintained to a certain vacuum status.

Compared with the prior arts, the air pumping assembly 13 of the vacuuming apparatus for a storage jar according to the present invention evacuates the air in the storage jar so that the storage jar can maintain a vacuum status for keeping food fresh. Further, the vacuuming apparatus for a storage jar includes the pressure valve 16 and the pressure valve gang switch 17 so that switch of the air pumping assembly 13 can be automatically controlled based on the air pressure in the storage jar. When the air pressure in the storage jar gradually decreases, the pressure valve 16 lowers in the first airtight pipe until the pressure valve gang switch 17 is disconnected with the pressure valve 16, which consequently cause the vacuuming apparatus for a storage jar stop operating. When air permeates into the storage jar, the air pressure in the storage jar gradually increases and the pressure valve 16 moves up in the first airtight pipe until the pressure valve gang switch 17 is triggered, which cause the air pumping assembly 13 restart to operate. Through such an automatic control by cooperation of the pressure valve 16 and the pressure valve gang switch 17, the storage jar can maintain a certain vacuum status for a long time and this configuration can effectively keep foods in the jar fresh for a long time.

In an embodiment of the present invention, the vacuuming apparatus for a storage jar further comprises a sealing ring switch button 19 and a sealing ring frame 20. The sealing ring switch button 19 is provided at the center of the sealing ring frame 20 and the sealing ring frame 20 is supported by inner sides of the sealing ring 12.

In addition, the vacuuming apparatus for a storage jar further comprises a pulling buckle 18 and a pulling buckle fixing position provided on the top of the casing 11. The pulling buckle 18 is installed at the pulling buckle fixing position by two rotary shafts. The pulling buckle 18 is provided with a triggering piece 181 and a triggering lever 182. When the pulling buckle 18 is positioned closely in the pulling buckle fixing position, the triggering piece 181 presses the sealing ring switch button 19 and the triggering lever 182 abuts against the electrical switch button 14.

The pulling buckle 18 is delicately designed such that it can control the electrical switch button 14 and the sealing ring switch button 19 simultaneously. The pulling buckle 18 can rotate about an axis with respect to the top of the casing 11. When the pulling buckle 18 is in a closed status (namely, positioned closely to the top of the casing 11), the triggering piece 181 of the pulling buckle 18 presses down on the sealing ring switch button 19 which causes the sealing ring frame 20 press the sealing ring 12 to make it expand around. As a result, the sealed connection between the storage jar and the casing 11 can be further enhanced. At the same time, the triggering lever 182 presses down on the electrical switch button 14 to switch on the circuit of the air pumping assembly 13.

In an embodiment of the present application, the air pumping assembly 13 comprises a motor 131, a helical gear 132, a circular gear 133 and an air pump 134. An output end of the motor 131 is fixedly connected to the helical gear 132 which is engaged with the circular gear 133. The air pump 134 comprises a sleeve and a piston installed in the sleeve. One end of the piston is fixed at an edge of the circular gear 133. The motor 131 drives the circular gear 133 to rotate via the helical gear 132 and drives the piston to reciprocate in the sleeve so as to realize air pumping. Certainly, this is merely a specific embodiment of the present invention. Structure of the air pumping assembly 13 of the present invention is not limited to this embodiment and it may employ other devices that can realize vacuum pumping.

In an embodiment, the casing 11 is provided therein with a second airtight pipe in communication with the storage jar. The exhaust valve button 15 is mounted in the second airtight pipe. An exhaust valve button spring is mounted inside the second airtight pipe with one end of the exhaust valve button spring abutting against the bottom of the second airtight pipe and the other end of the exhaust valve button spring abutting against the exhaust valve button 15. The second airtight pipe is provided with a first vent and the exhaust valve button 15 is provided with a second vent. When the exhaust valve button 15 is pressed, the second vent is aligned with the first vent.

When the exhaust valve button 15 is pressed, the second vent is aligned with the first vent which cause ambient air enter into the storage jar via the two vents to restore the air pressure in the storage jar. Under such situation, the storage jar can be easily opened.

In an embodiment, the casing 11 comprises an upper casing 111 and a lower casing 112. The upper and lower casings 111, 112 are fixedly connected by a fastening bolt to form a receiving chamber in which the relevant working members can be installed. The lower casing 112 is provided with a sealing ring 12 fixing position in which the sealing ring 12 is installed.

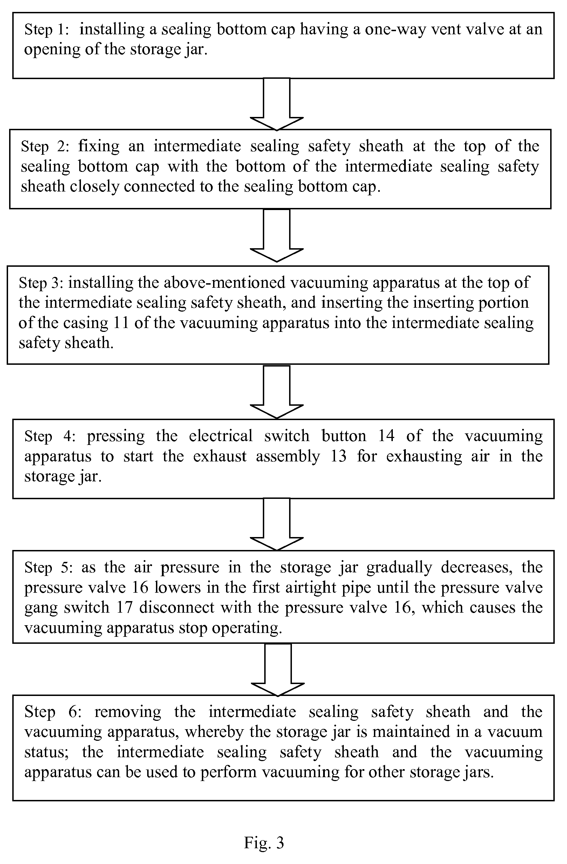

Referring to Figure 3, the present invention also provides a method for preserving food for a long time by utilizing a storage jar. This method comprising the steps of:
Step 1: installing a sealing bottom cap having a one-way vent valve at an opening of the storage jar;
Step 2: fixing an intermediate sealing safety sheath at the top of the sealing bottom cap with the bottom of the intermediate sealing safety sheath closely connected to the sealing bottom cap;
Step 3: installing the above-mentioned vacuuming apparatus at the top of the intermediate sealing safety sheath, and inserting the inserting portion of the casing 11 of the vacuuming apparatus into the intermediate sealing safety sheath;
Step 4: pressing the electrical switch button 14 of the vacuuming apparatus to start the exhaust assembly 13 for exhausting air in the storage jar;
Step 5: as the air pressure in the storage jar gradually decreases, the pressure valve 16 lowers in the first airtight pipe until the pressure valve gang switch 17 disconnect with the pressure valve 16, which causes the vacuuming apparatus stop operating;
Step 6: removing the intermediate sealing safety sheath and the vacuuming apparatus, whereby the storage jar is maintained in a vacuum status; the intermediate sealing safety sheath and the vacuuming apparatus can be used to perform vacuuming for other storage ars.

Compared with the prior arts, the method of preserving food for a long time utilizing a storage jar according to the present invention has the following advantages. Each storage jar is installed with a sealing bottom cap. The sealing bottom cap, the intermediate sealing safety sheath and the vacuuming apparatus are detachable so that after vacuum pumping is finished by the vacuuming apparatus, the intermediate sealing safety sheath and the vacuuming apparatus can be removed from the storage jar in order to perform operations to other storage jars. By using one intermediate sealing safety sheath and one vacuuming apparatus to cooperate with multiple sealing bottom caps, multiple storage jars can be kept in the working status. It is unnecessary to equip with one vacuuming apparatus for each of the storage jars thereby it can save a lot of resources and reduce the use of cost.

Following to the above Step 6, one can, at a certain interval, repeat steps 2-6 to the storage jar which has been vacuumized. After connection of the intermediate sealing safety sheath and the vacuuming apparatus, the vacuuming apparatus can detect the vacuum status of the storage jar. If it is detected that air has entered the storage jar, vacuum pumping is performed again under control by cooperation of the pressure valve 16 and the pressure valve gang switch 17. In this manner, a vacuum environment in the storage jar can be kept for a long time.

When a storage jar needs to be opened, on can repeat the above steps 2-3 to the storage jar which has been vacuumized and then press the exhaust valve button 15 on the vacuuming apparatus. After reconnection of the intermediate sealing safety sheath and the vacuuming apparatus, the air pressure in the storage jar can be restored and the storage jar can be easily opened.

At the above step 1, a double-layered sealing ring 12 is provided at the sealing bottom cap of the one-way vent valve in order to fill the clearance between the opening of the storage jar and the sealing bottom cap. The double-layered sealing ring 12 can ensure airtightness of the opening of the storage jar and can improve the air pumping efficiency and the vacuum maintenance time.

The above is only a preferred embodiment of the present invention, and it should be noted that for those of ordinary skill in the art, various improvements and modifications can be made without departing from the technical principle of the present invention, and these improvements and modifications shall be considered within the scope of the present invention.

## Claims

1. A vacuuming apparatus for a storage jar comprising: a casing, a sealing ring, an air pumping assembly, an electrical switch button, an exhaust valve button, a pressure valve, a pressure valve spring and a pressure valve gang switch, the bottom of the casing being an inserting portion to be inserted to an opening of the storage jar, the sealing ring being mounted on the inserting portion, the air pumping assembly being mounted inside the casing, an air intake pipe of the air pumping assembly communicating with the storage jar, the air pumping assembly being electrically connected to the electrical switch button, both the electrical switch button and the exhaust valve button extending out of the top of the casing to facilitate operations, the casing being equipped therein with a first airtight pipe in communication with the storage jar, the pressure valve being installed in the first airtight pipe, the pressure valve spring being inside the first airtight pipe such that one of its ends abutting against the pressure valve and another end thereof abutting against the bottom of the first airtight pipe, the pressure valve gang switch being aligned with the pressure valve and connected with the electrical switch button in series.

2. A vacuuming apparatus for a storage jar according to claim 1, wherein it further comprises a sealing ring switch button and a sealing ring frame, the sealing ring switch button being provided at the center of the sealing ring frame and the sealing ring frame being supported by inner sides of the sealing ring.

3. A vacuuming apparatus for a storage jar according to claim 2, wherein it further comprises a pulling buckle and a pulling buckle fixing position provided on the top of the casing, the pulling buckle being installed at the pulling buckle fixing position by two rotary shafts, the pulling buckle being provided with a triggering piece and a triggering lever,
when the pulling buckle being positioned closely in the pulling buckle fixing position, the triggering piece pressing the sealing ring switch button and the triggering lever abutting against the electrical switch button.

4. A vacuuming apparatus for a storage jar according to claim 1, wherein the air pumping assembly comprises a motor, a helical gear, a circular gear and an air pump, an output end of the motor being fixedly connected to the helical gear which is engaged with the circular gear, the air pump comprising a sleeve and a piston installed in the sleeve, and one end of the piston being fixed at an edge of the circular gear.

5. A vacuuming apparatus for a storage jar according to claim 1, wherein the casing is provided therein with a second airtight pipe in communication with the storage jar, the exhaust valve button being mounted in the second airtight pipe, the second airtight pipe having mounted therein an exhaust valve button spring with one end of the exhaust valve button spring abutting against the bottom of the second airtight pipe and the other end of the exhaust valve button spring abutting against the exhaust valve button, the second airtight pipe being provided with a first vent and the exhaust valve button being provided with a second vent, the second vent being aligned with the first vent when the exhaust valve button is pressed.

6. A vacuuming apparatus for a storage jar according to claim 1, wherein the casing comprises an upper casing and a lower casing, the upper and lower casings being fixedly connected by a fastening bolt, the lower casing being provided with a sealing ring fixing position in which the sealing ring is installed.

7. A method for preserving food for a long time by utilizing a storage jar comprising the steps of:
step 1: installing a sealing bottom cap having a one-way vent valve at an opening of the storage jar;
step 2: fixing an intermediate sealing safety sheath at the top of the sealing bottom cap with the bottom of the intermediate sealing safety sheath closely connected to the sealing bottom cap;
step 3: installing a vacuuming apparatus according to claim 1 at the top of the intermediate sealing safety sheath, and inserting the inserting portion of the casing of the vacuuming apparatus into the intermediate sealing safety sheath;
step 4: pressing the electrical switch button of the vacuuming apparatus to start the exhaust assembly for exhausting air in the storage jar;
step 5: as the air pressure in the storage jar gradually decreases, the pressure valve lowers in the first airtight pipe until the pressure valve gang switch disconnect with the pressure valve, which causes the vacuuming apparatus stop operating;
step 6: removing the intermediate sealing safety sheath and the vacuuming apparatus, whereby the storage jar is maintained in a vacuum status; the intermediate sealing safety sheath and the vacuuming apparatus being optionally used to perform vacuuming for other storage jars.

8. A method for preserving food for a long time by utilizing a storage jar according to claim 7, wherein it further comprises the step of:
Following to the step 6, repeating, at a certain interval, steps 2-6 to the storage jar which has been vacuumized.

9. A method for preserving food for a long time by utilizing a storage jar according to claim 7, wherein it further comprises the step of:
when a storage jar needs to be opened, repeating the steps 2-3 to the storage jar which has been vacuumized, and then pressing the exhaust valve button on the vacuuming apparatus.

10. A method for preserving food for a long time by utilizing a storage jar according to claim 7, wherein it further comprises the step of:
in the step 1, providing a double-layered sealing ring at the sealing bottom cap of the one-way vent valve in order to fill a clearance between the opening of the storage jar and the sealing bottom cap.
